# EUROPEAN PATENT SPECIFICATION

(11) **EP 0 491 238 B1**
(45) Date of publication and mention of the grant of the patent: **08.03.1995**
(21) Application number: 91120827.0
(22) Date of filing: 04.12.1991
(51) Int. Cl.: B30B 11/22, B01J 2/20

(54) **Screw-type extrusion granulating apparatus**
Vorrichtung zur Schneckenextrusionsgranulierung
Dispositif d'extrusion à vis pour granulation

(30) Priority: 17.12.1990 JP 411419/90
(43) Date of publication of application: 24.06.1992
(73) Proprietor: FUJI PAUDAL CO., LTD., Joto-ku, Osaka (JP)
(72) Inventor: Fujimoto, Tesuma, Neyagawa-shi Osaka (JP); Ohta, Yuh, Kadoma-shi Osaka (JP); Nakayama, Michihiro, Misima-gun Osaka (JP); Uesugi, Harno, Osaka (JP)
(74) Representative: Wilhelm & Dauster Patentanwälte European Patent Attorneys

(56) References cited:
- DE-A- 3 617 175
- DE-C- 480 611
- US-A- 3 304 578
- US-A- 3 337 913

## Description

The present invention realtes to a screw-type extrusion granulating apparatus according to the introductory portion of claims.

Extrusion granulators are widely employed in the pharmaceutical, food, agricultural, chemical, and ceramic industries where moistened powdered raw materials such as chemicals, fertilizer, or feed stuffs to be formed into granules. Basic screw-type extrusion granulators utilize some form of rotating screw to transport the moistened powered paterial to a die having holes formed therein. The pressure and scraping action of the screw forces the moistened powdered material through the holes in the die through which the material emerges in granulated form. 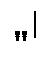 Front" type extrusion granulators have the die located in axial alignment with the conveying screw.

Conventional extrusion granulators of this type consist primarily of four main elements including a single or twin conveying screw arrangement driven by a motor, a screw housing in which the conveying screw is disposed, an extrusion blade or blades mounted to the front end of the conveying screw, and a flat die plate attached to the front end of the screw housing in axial alignment with the screw. In operation, powdered raw material previously moistened and plasticized by kneading machines is inserted into the screw housing from a feed hopper. The raw material is then forced to transfer forwardly to the front end of the screw housing by means of the conveying screw. During this process, the raw material is pressurized and compressed by the conveying screw and is extruded continuously through multiple die holes in the die plate.

Internal extruding pressure for extruding the raw material through the flat die plate has its maximum pressure in a uniform pressure region located just prior to the die plate. Therefore, the die thickness is selected to have sufficient strength to withstand the maximum extruding pressure. Typically, a smaller sized conventional extruder having a screw diameter in the range of 60 millimeters to 130 millimeters will have a die plate of a thickness of at least 5 millimeters, while larger extruders with screw diameters in the range of 180 millimeters to 300 millimeters have a die plate of at least 8 millimeters in thickness.

Extrusion granulators with flat die plates of this order of thickness achieve satisfactory production capacities when their die holes are relatively large so as to extrude correspondingly large granules. However, at a constant die thickness, as the die hole size is reduced to produce smaller sized granules, the production capacity of such extrusion granulators is reduced to unacceptably low levels and ultimately causes clogging of the die holes due to increased frictional drag imposed on the extrusion flow of material through the die holes. Generally, it has been found that a conventional flat die extruder having a die thickness of 5 to 8 millimeters can extrude raw material through a die hole diameter below 1.5 millimeters only with a very small production capacity which is normally far below acceptable industrial production rates.

This problem is becoming increasingly acute as smaller granule sizes are becoming increasingly required in various industries. For example, in the agricultural chemical industry, smaller herbicide granules in the range of about 0.7 to 1.2 millimeters can be distributed more uniformly than larger sized granules, enabling a lesser quantity of the smaller granules to achieve the same herbicidal effect as a greater quantity of larger granules, thereby reducing herbicide costs and minimizing any attendant environmental hazard. Likewise, in the pharmaceutical field, smaller sized granules improve drug availability and dispensability.

It has been proposed to reduce the die thickness to correspondingly reduce frictional drag and, in turn, achieve a higher production capacity. However, in tests employing a punched die plate having a punched die hole diameter of 1 millimeter with a die plate thickness of 1 millimeter and an opening ratio of 22.4%, although the production capacity of the granulator was significantly increased temporarily, the punched plate deformed outwardly after several minutes of operation, which led to a wider clearance between the punched plate and the extrusion blade, resulting in a lower production capacity and finally destruction of the punched plate. The primary cause of this result is that the relatively thin punched plate is not sufficiently strong to withstand the internal pressure generated within the screw housing.

In an effort to solve this problem, another type of extrusion granulator known as a screw-type radial extrusion granulator has been developed for production of smaller diameter extrudates in the range of 0.7 to 1.2 millimeters. In this type of granulator, an extracting screw is mounted to the conveying screw in a screw housing having a die holder which supports a generally semi-cylindrical punched plate laterally outwardly about the extracting screw. In this type of extrusion granulator, the raw material is first conveyed and compressed by the conveying screw axially within the screw housing and then is forced radially outwardly through the semi-cylindrical die by means of the extracting screw. A problem with this arrangement is that internal pressure generated by the conveying screw with the housing cannot be fully employed for the extrusion of the raw material through the die because the raw material is forced to change direction from a generally axial flow to a movement directed radially outwardly from the extracting screw, thus resulting in energy loss and inefficient production of granulate. Accordingly, the production capacity of this radial type extrusion granulator is far smaller than that of the front-type extrusion granulator.

In addition, a screw-type extrusion granulating apparatus was known (US-A 3 304 578) comprising a housing defining a screw chamber for receiving material, a rotably driven conveying screw disposed in said screw chamber for pressurizing conveyance of that material through said screw chamber, and a die supported in actual alignment with said conveying screw and extending axially from one end of said screw chamber. The die is of generally uniform thickness in the shape of a dome and has a plurality of extrusion openings oriented radially with respect to the dome shape of said die. The extrusion openings are in a generally uniform array over substantially the entire surface thereof. The terminal end of the conveying screw extending axially interially of that die is provided with a pressure-applying member which creates high pressures for forcing the materials through the holes. The high pressures are also used for heating the material especially grasses by which heating it is intended to melt and/or vaporize moisture content in this material. The dies of all embodiments have a thickness which is at least five times the smallest diameter of the holes. The die is relatively thick which thickness is necessary as the die is used for supporting a bearing of the pressure-applying member.

It is accordingly an object of the present invention to provide a front-type screw extrusion granulating apparatus which solves the aforementioned problems. Specifically, it is an object of the present invention to provide such an extrusion granulating apparatus which is capable of producing reduced sized granulate in the range of 0.7 to 1.2 millimeters in sufficient rates of production for efficient industrial applications. This object is achieved by claim 1.

According to the preferred embodiment of the present invention, the extrusion blade is of a helical or spiral configuration and uniformly spaced from the die, e.g, at a distance of approximately 1 millimeter. Preferably, the die is semi-spherical in shape with the extrusion openings being generally circular in shape and of a diameter generally equal to the thickness of the die.

In one embodiment, the screw-type extrusion granulating apparatus includes two conveying screws disposed in side-by-side generally parallel relationship within the screw housing and the housing has two dies mounted thereto in side-by-side relationship with each die in axial alignment with a respective one of the conveying screws.
Figure 1 is a schematic side elevational view, partially in vertical cross-section, of a conventional prior art screw-type front extrusion granulator having a planar die plate;
Figure 2 is a graph representing the fluctuation of internal extrusion pressure according to the location of powder material during conveyance within the extrusion granulator of Figure 1 in normal operation thereof;
Figure 3 is a schematic representation of the operational forces and variables which affect the production capacity of the extrusion granulator of Figure 1 during normal operation thereof;
Figure 4 is a front elevational view of the planar die and mounting plate of the prior granulating apparatus of Figure 1;
Figure 5 is a schematic side elevational view, partially in vertical cross-section, of a conventional prior art screw-type radial extrusion granulator;
Figure 6 is a perspective view of the extracting screw of the radial extrusion granulator of Figure 5;
Figure 7 is a perspective view of the die holder of the radial extrusion granulator of Figure 5;
Figure 8 is a perspective view of the semi-cylindrical die of the radial extrusion granulator of Figure 5;
Figure 9 is a top plan view of a screw-type extrusion granulating apparatus according to the preferred embodiment of the present invention;
Figure 10 is a side elevational view of the extrusion granulating apparatus illustrated in Figure 9;
Figure 11 is a perspective view of the die and its supporting stiffening plate of the extrusion granulating apparatus illustrated in Figure 9;
Figure 12 is a side elevational view of one conveying screw and extrusion blade from the extrusion granulating apparatus illustrated in Figure 9;
Figure 13 is a side elevational view, partially in vertical cross-section, of the front end portion of one conveying screw and its extrusion blade and the die of the extrusion granulating operation of Figure 9;
Figure 14 is side elevational view, partially in vertical cross-section, of a vertically disposed screw extrusion granulating apparatus according to an alternate embodiment of the present invention.

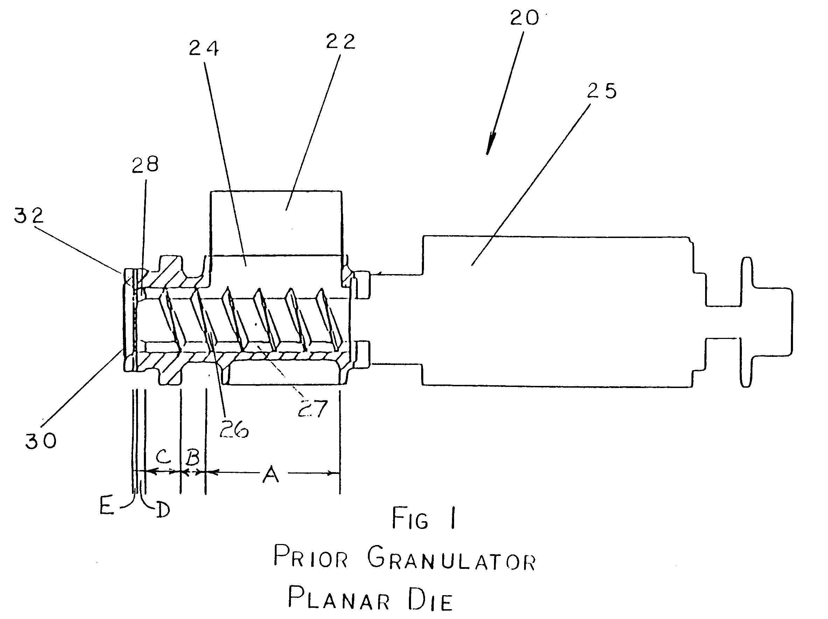

Referring now to the accompanying drawings and initially to Figures 1-4, Figure 1 is a side elevational view, with portions cut away in cross section for purposes of clarity, of a prior art front extrusion granulator of the type having a planar die, generally indicated at 20. As is conventional, the granulator 20 includes an elongate extrusion housing 24, one end of which is mounted to a drive motor assembly 25. The extrusion housing 24 defines an internal screw chamber 27 rotatably containing a conveying screw 26 which is affixed to and driven by an output shaft (not shown) of the motor assembly 25. A planar die 30 is mounted to the forward end of the extrusion housing 24 in axial alignment with the conveying screw 26, i.e., in facing relation to the forward end of the screw 26 perpendicularly to its axis, by means of a die mounting plate 32 and conventional bolts. The die 30 is formed with a plurality of die openings spaced uniformly about its exposed surface area. An extrusion blade 28 is mounted to the forward end of the screw 26 closely adjacent the die 30.

As discussed above, such planar die extrusion granulators 20 are limited in production capacity due to inherent problems with the planar die 30. In operation, powdered raw material previously moistened and plasticized by kneading machines is charged into the extrusion housing 24 from a feed hopper 22 affixed to the extrusion housing 24 and opening downwardly into the rearward end of the screw chamber 27. The charged raw material is then forced to transfer forwardly to the front end of the extrusion housing 24 and the die 30 by rotational action of the conveying screw 26, which pressurizes and compresses the raw material to extrude the material outwardly through the openings in the die 30.

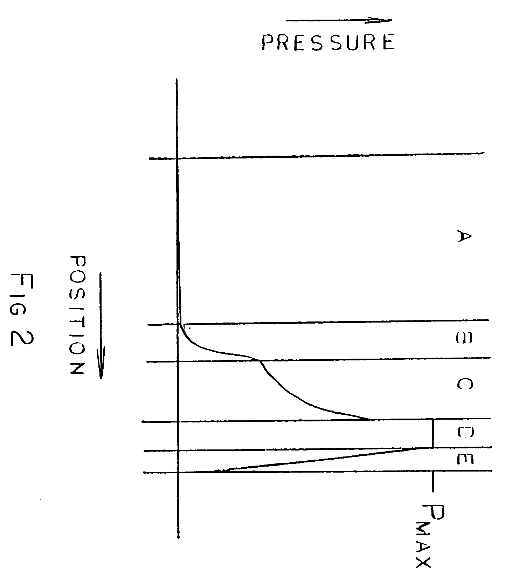

With reference to Figures 1 and 2, internal extruding pressure within the extrusion housing 24 can be seen to rise throughout this process. It can be seen that in region A, representing the region of the screw chamber 27 communicating with the feed hopper 22, pressure is at a minimum, but rises rapidly as the material is conveyed beyond the feed hopper 22 to the front end of the screw 26, represented by the regions B and C. As the moistened raw material is conveyed to the extrusion blade 28 in the region D, maximum pressure is reached as the material is forced into the openings in the die. As the material passes through the die openings, the pressure drops from the maximum pressure level at the entrance end of the openings to ambient atmospheric pressure at the exit end of the openings, as represented at E. The die thickness must therefore be designed so as to have sufficient strength for resisting the maximum extruding pressure, Pₘₐₓ. As mentioned above, typical planar die plates in conventional extrusion granulators are of a thickness in the range of at least 5 to 8 millimeters. For the reasons explained below, die plates of these thicknesses perform unsatisfactorily when formed with smaller than conventional die holes sized to extrude relatively small granules in the range of 0.7 to 1.2 millimeters, for example.

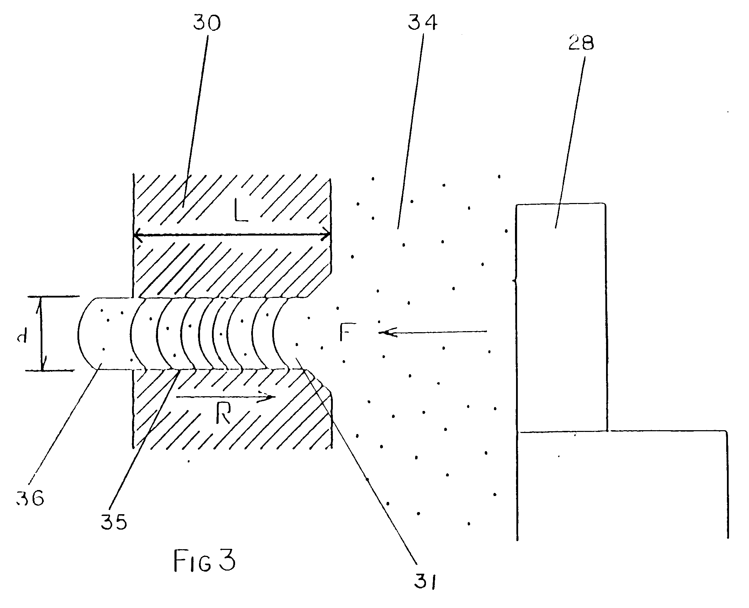

Figure 3 offers a diagrammatic representation of the extrusion operation. The extruding force F applied to the moistened raw materials 34 at the die 30 should be greater than the drag force R created by the friction imposed on the material to be extruded moving along the die hole wall 35. Generally, at a constant die hole diameter d, the drag force R is proportional to the die hole length L, i.e., the thickness of the die 30. Therefore reducing the diameter d of the die opening while maintaining sufficient die thickness L to resist Pₘₐₓ results in increasing the attendant drag force R which ultimately results in a lowered production capacity or even clogging of the die openings 31. Typically, conventional planar die extrusion granulators with a die thickness of 5-8 millimeters can extrude raw materials through a die hole diameter below 1.5 millimeters only at a very small production rate which is normally far below acceptable industrial levels.

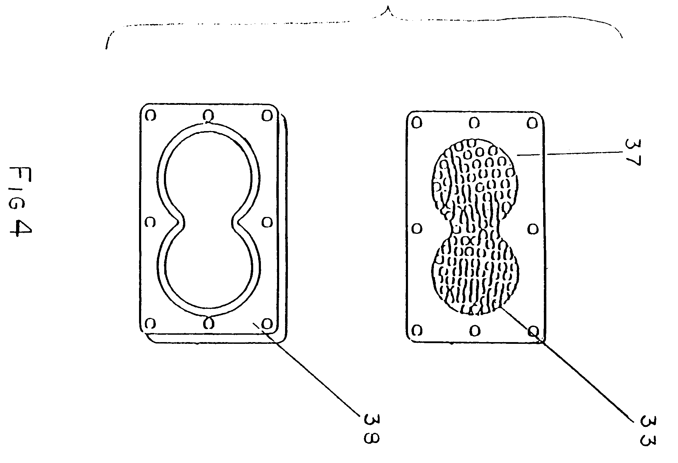

As shown in Figure 4, it has been proposed to reduce the die thickness L by employing a flat die formed as a punched plate 37 of a 1.0 millimeter thickness with the punched die holes 33 being of a diameter of 1.0 millimeter, the die plate 37 to be held in place by a die holder 38 as discussed above. While tests of such a punched die plate temporarily achieved a considerably increased production capacity, the punched die plate was unable to withstand the extrusion pressure without deforming outwardly which led to a wider clearance between the punched plate and extrusion blade resulting in a lowered production rate and ultimate destruction of the punched plate.

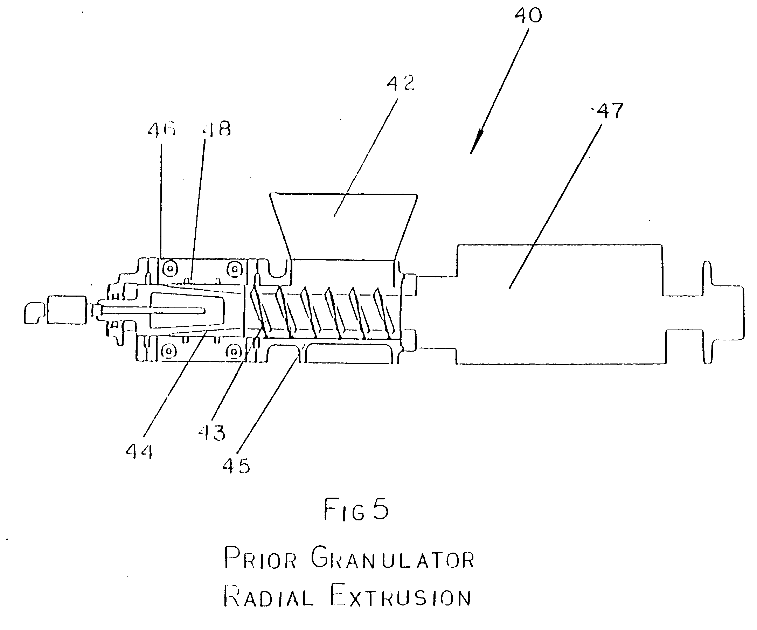

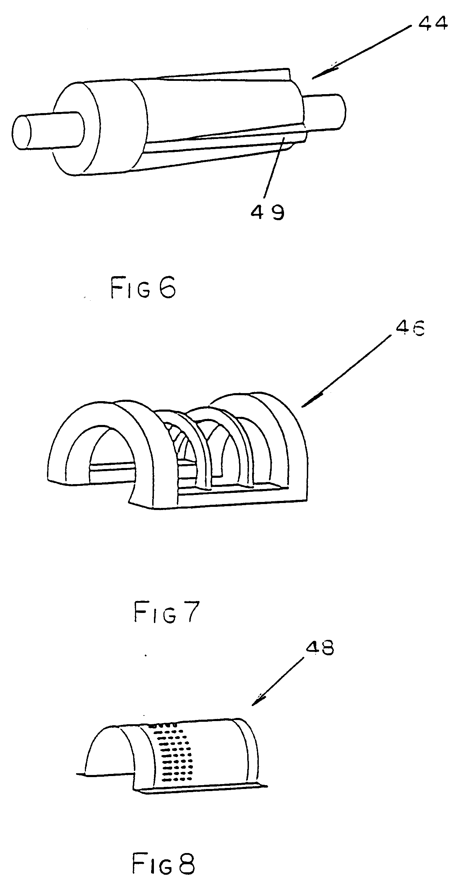

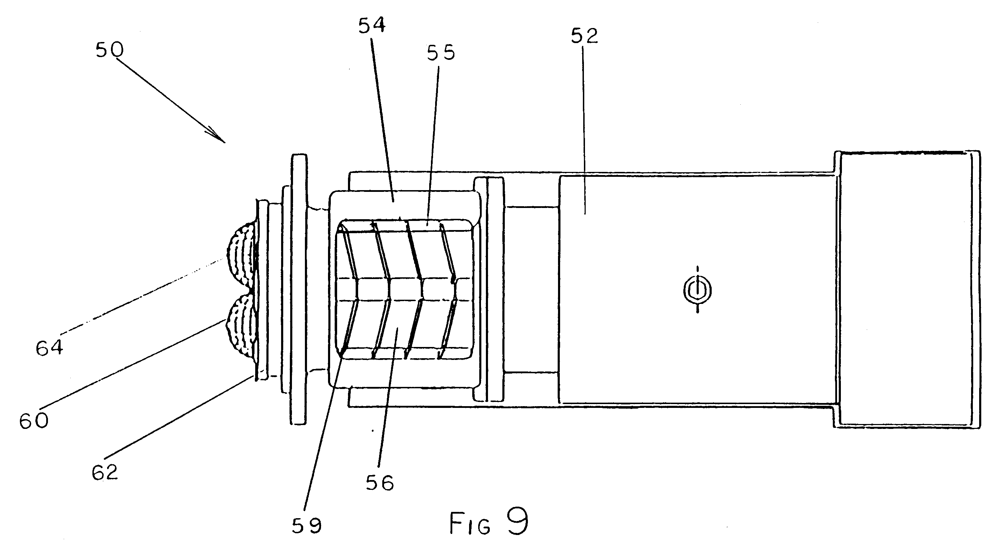

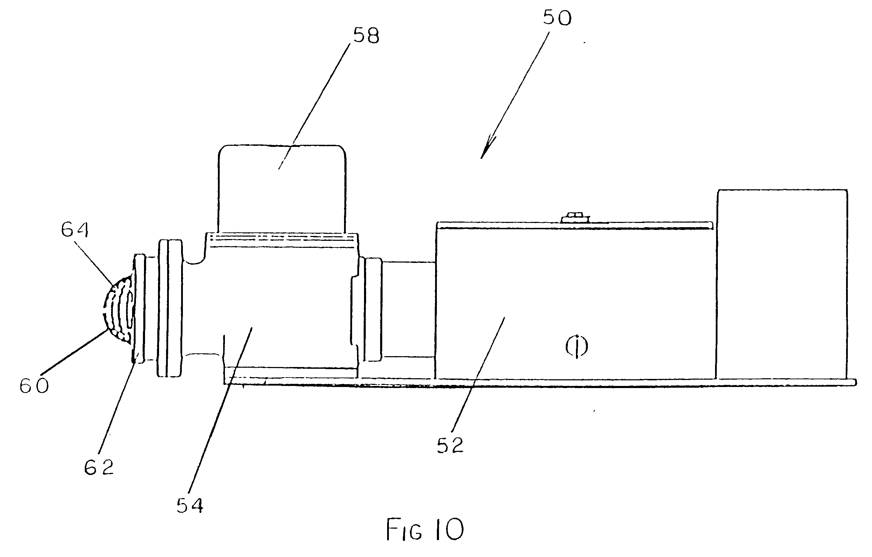

As also discussed above, these problems were alternatively addressed by the development of the radial-type extrusion granulator depicted generally at 40 in Figure 5. This type of granulator is similar to the planar die front extrusion granulator in all aspects except for the extrusion mechanism. A conveying screw 43 is contained within a screw housing 45 which is in turn mounted to a drive motor housing 47. The rotational axis of the screw 43 is oriented horizontally and is fed from above by a feed hopper 42. An extracting screw 44 is mounted to the forward end of the conveying screw 43. As best seen in Figure 6, the extracting screw 44 basically has a frusto-conical body with circumferentially-spaced axially-extending blades 49 projecting outwardly therefrom. A semi-cylindrical die 48, shown in Figure 8, is supported within the confines of a semi-circular die holder frame 46 as seen in Figure 7.

As seen in Figure 5, the die and holder assembly 46,48 is mounted to the lateral side of the front portion of the screw housing 45, radially outwardly adjacent the extracting screw 44. In this type of extrusion granulator, moistened powder raw material is conveyed under pressure by the conveying screw 43 to the extracting screw 44 which drives the material laterally radially outwardly through the semi-cylindrical die 48. However, internal pressure generated by the conveying screw 43 cannot be fully employed for extrusion purposes because raw material pressurized by the screw 43 is forced to change direction from axial movement to radially outward movement by means of the extracting screw 44, whereby only a portion of the pressure generated by the conveying screw 43 can be utilized for extrusion purposes resulting in a less efficient and less productive granulation process than is experienced with front type granulators.

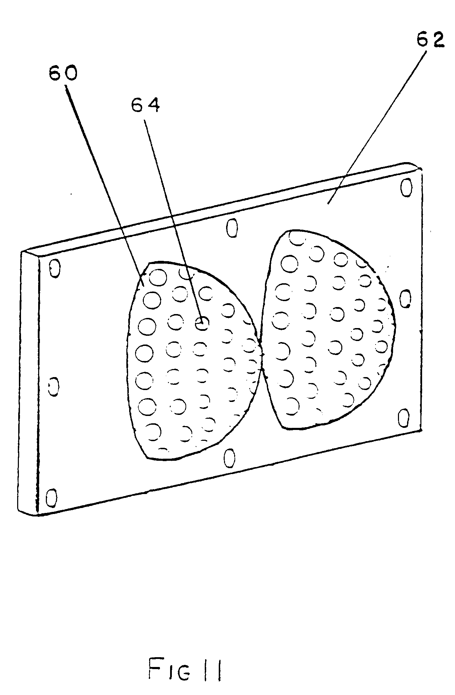

Turning now to Figures 9 and 10, one embodiment of a front-type screw extrusion granulating apparatus, constructed in accordance with the teachings of the present invention, is generally indicated at 50. The granulating apparatus 50 includes an extrusion housing 54 mounted to one end of a box-like housing 52 containing a drive motor assembly. The extrusion housing 54 defines an interior screw chamber 55 in which two conveying screws 56 are rotatably supported in side-by-side parallel relation for driving by the motor assembly. As seen in Figure 10, a feed hopper 58 opens downwardly into the screw chamber 55 for feeding the moistened powder material en route to granulation. It should be understood that while the granulating apparatus 50 described herein is equipped with two parallel conveying screws 56, those persons skilled in the art will readily recognize that the present invention is equally applicable to a single screw extrusion granulator of similar construction.

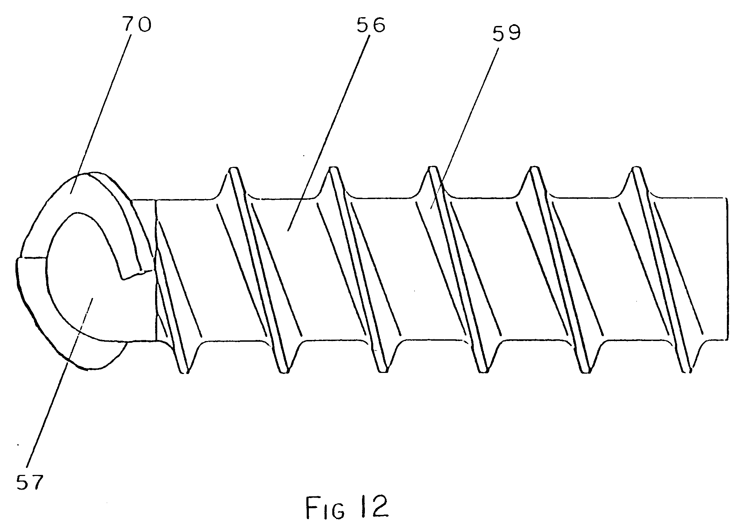

According to the present invention, a die element 60 formed with a pair of dome-shaped die portions is mounted to the end of the extrusion housing 54 utilizing a stiffening plate 62 which is bolted or otherwise affixed to the extrusion housing 54. With reference to Figure 11, the stiffening plate 62 is a generally rectangular planar plate having a plurality of bolt holes at its periphery for attachment to the extrusion housing 54 and formed in the central portion of the stiffening plate 62 with two openings through which the dome-shaped portions of the die 60 may protrude. The die 60 further includes a generally flat base portion laterally adjacent the dome-shaped portions which is typically welded or otherwise affixed to the inner surface of the stiffening plate 62. In mounted disposition of the stiffening plate and die element 62,60 to the extrusion housing 54, the stiffening plate openings and the dome-shaped portions of the die 60 are in axial alignment respectively with the conveying screws 56.

Preferably, the dome-shaped portions of the die 60 are of a semi-spherical configuration but dome-shaped configurations of other curvatures are also contemplated. For example, any die whose dome-shaped portion is a portion of a hollow spheroid, whether a circular spheroid, an oblate, or a prolate spheroid, or any other curved surface of a body of revolution, is contemplated to be within the scope of this invention.

The die 60 is preferably formed as a relatively thin punched plate with each dome-shaped portion of the die 60 having multiple circular openings 64 formed therein and generally uniformly distributed over the entire domed surface in a geometrical order or in a zig-zag manner. The diameter of the die holes 64 is generally about equivalent to the thickness of the die plate. As those persons skilled in the art will understand, the present invention is not restricted for formation of the die 60 from a punched plate but, instead, the die 60 may be formed of any suitable material and in any suitable manner by which perforated dome-shaped portions of a substantially uniform thickness can be produced. For example, the die 60 may be fabricated as a spherically press-formed blind plate with the die holes being subsequently formed by a drilling operation or, alternatively, the dome-shaped die portions may be fabricated of a screen mesh material formed into a semi-spherical or other dome-like shape.

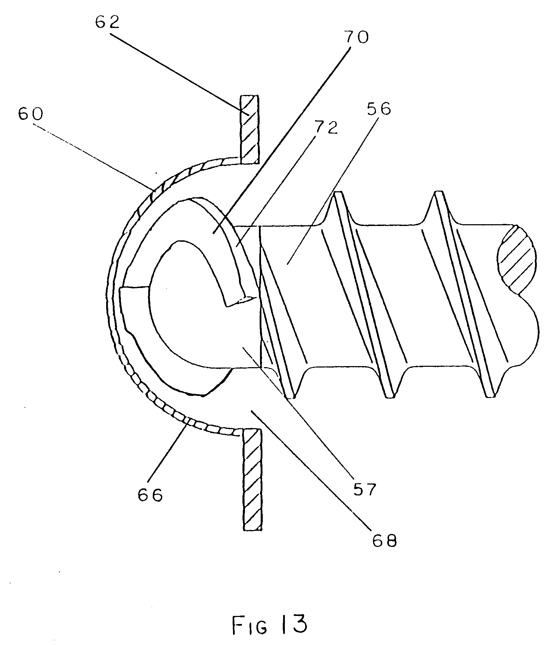

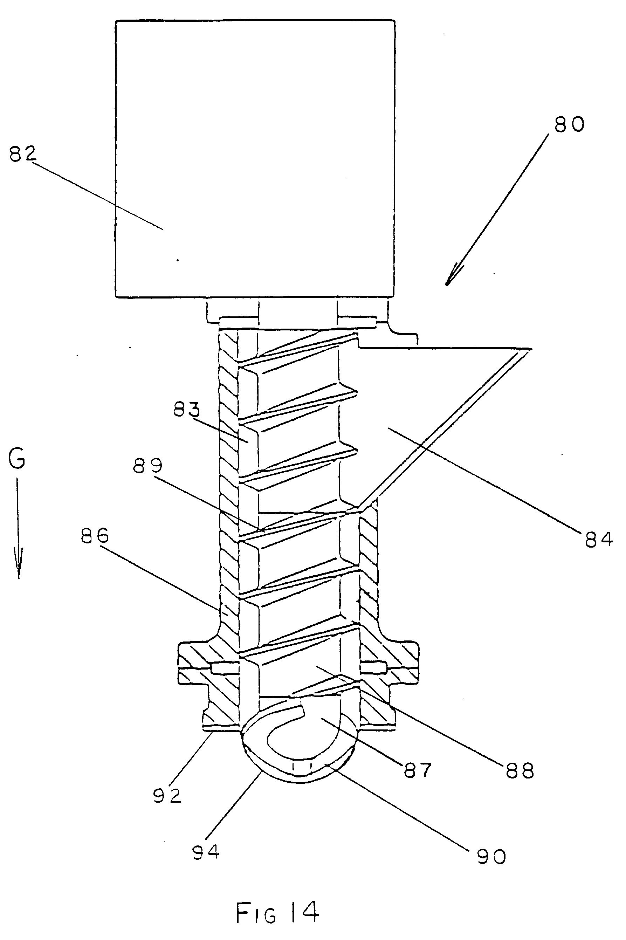

As best seen in Figure 12, each conveying screw 56 has an elongated generally cylindrical root portion having a blade 59 projecting outwardly from the surface thereof in a helical configuration substantially the entire length of the root portion. A domed end portion 57 is formed at the forward end of each conveying screw 56 and includes a helically curved extrusion blade 70 extending outwardly therefrom, the curvature of the domed end portion 57 and the curved extrusion blade 70 being in conformity to the curvature of the dome-shaped portions of the die 60. As best seen in Figure 13, the outward edge 72 of each spherical extrusion blade 70 extends into the confines of its respectively associated dome-shaped die portion in substantially concentric relation therewith at a relatively constant spacing from the inner surface 66 of the dome-shaped die portion.

In operation, powdered raw material, moistened and plastified by pre-treatment by a kneading machine, is charged into the extrusion housing 54 through the feed hopper 58. The charge material is compressed, densified, and pressurized as the material is forced toward the forward end of the screw chamber 55 and the die 60 by means of the rotation of the conveying screws 56. When the material reaches the spacing between the forward ends 57 of the conveying screws 56 and the interior surface 66 of the dome-shaped portions of the die 60, the material is forcibly extruded continuously through the die openings 64 by the combination of a scraping effect on the material layered over the interior die surface 66 created by the helically-shaped extrusion blade 70 and pressure created by the conveying screws 56.

An advantage of fabricating the die from a perforated flat thin plate formed into a dome-shaped die is to provide significantly increased die strength which enables the use of thin punched plate as a die material. Initial experimental tests have indicated that a dome-shaped die according to the present invention can withstand an internal extrusion pressure within the screw housing of up to twelve times greater than a flat die plate of the same thickness. In addition the dome-shaped die surface increases the effective opening ratio of the die holes up to three times that of flat die plates. As a collective result, dome-shaped dies according to this invention experience reduced frictional forces and achieve considerably increased production capacity, especially in extruding smaller sized granules, e.g., in the range of 0.7 to 1.2 millimeters. In turn,dies according to the present invention should have a considerably longer effective life. Further, the extruding force is substantially uniformly distributed over the entire interior surface of the die. This effect is obtained by a combination of propulsive pressure due to the conveying screw and the rubbing or scraping effect of the of the extrusion blade on the material in the region between the outward edge of the rotating extrusion blade and the internal die surface which contributes to uniform and improved extrusion performance and increased production capacity.

For purposes of comparison, a die formed according to the present invention as a relatively thin punched plate with semi-spherical dome-like die portions was tested against a flat die plate of conventional thickness, as well as a flat die plate formed of a relatively thin punched plate by performing separate extrusion operations in which each die was installed on a conventional screw-type front extrusion granulator and a common moistened powder raw material was processed through the granulator. As an additional basis of comparison, a corresponding extrusion operation was performed on a conventional screw-type radial extrusion granulator of comparable construction equipped with a semi-cylindrical die of the type described above. The front extrusion granulator utilized in the tests was a Model EXDF-100 manufactured by Fuji Paudal Co., Ltd. of Osaka, Japan, the assignee hereof, while the radial extrusion granulator was a Model EXD-100 also produced by Fuji Paudal Co., Ltd. In each case, each granulator was equipped with a conveying screw having a 100 millimeter diameter and with a 3.7 kilowatt motor driving the screw at a constant speed. The raw material processed in each case was a mixture of 70% talc powder and 30% bentonite powder, by weight, with a quantity of 17% water, based upon the dry weight of the powdered materials, being added as moistening agent. The spherically-shaped die according to the present invention had a 1 millimeter thickness and was formed with a sufficient number of uniformly-spaced die holes each of a 1 millimeter diameter to provide the die with a 22.4% opening ratio. Correspondingly, the conventional flat die was of a typical 5 millimeter thickness with a sufficient number of uniformly-spaced die holes of 1 millimeter diameter to produce the same 22.4% opening ratio. The flat punched plate die was of a 1 millimeter thickness with 1 millimeter diameter die holes producing a corresponding 22.4% opening ratio. The semi-cylindrical die utilized in the radial extrusion granulator was of a 1 millimeter punched plate formed with 1 millimeter diameter die holes at a 22.4% opening ratio. In testing of the semi-spherical die according to the present invention, the conveying screw was equipped with a dome-shaped forward end having a spherically shaped extrusion blade projecting outwardly therefrom, while the conveying screw utilized in testing each flat die plate was equipped with twin flat blades at its forward end of the conventional type depicted in Figures 1 and 3. The conveying screw and the tested radial extrusion granulator had an extracting screw affixed at its forward end, of the conventional type depicted in Figure 5.

In operation of the front extrusion granulator fitted with the 5 millimeter thickness flat die plate, a production capacity of about 150 kilograms of granules per hour was achieved by operation of the drive motor at an amperage between 15 and 18. While no deformation of the die plate occurred, the operation of the granulator was unstable and clogging of the die openings was observed. The front granulator when fitted with the flat 1 millimeter thickness punched die plate achieved a production rate of about 1,200 kilograms of granules per hour when operating the drive motor at 15 amperes before deformation and breakage of the die occurred shortly after operation began. The radial extrusion granulator achieved a production capacity of about 520 kilograms per hour at the same 15 amperage motor operation and ran stably on a continuous basis without die deformation, although the granulator tended to pulsate in operation. By contrast, the front extrusion granulator when equipped with the semi-spherical die of the present invention and operated at a motor amperage of 15 achieved a production capacity of about 1,950 kilograms per hour and ran stably on a continuous basis without die deformation and without any pulsation of the extrusion action.

In addition to the generally horizontal orientation illustrated by the preferred embodiment of the present invention, it is also possible to apply this invention to a vertical type screw extrusion granulating apparatus as shown generally at 80 in Figure 14. The vertical extrusion granulating apparatus 80 includes a motor housing 82 vertically oriented with its output drive facing downwardly and with an elongate screw housing 86 extending downwardly from the motor housing 82. A triangularly shaped feed hopper 84 is mounted to the screw housing 86 to feed raw material thereinto. A conveying screw 88 is drivenly affixed to the motor 82 and extends downwardly through the screw housing 86 for rotation therewithin. The conveying screw 88 is of substantially the same construction as the conveying screws 56 of the extrusion granulator 50 of Figures 9-13, a having a helical blade 89 extending the length of the root portion of the screw 88 and having an extrusion blade 90 affixed to the outer surface of the downward "front" end 87 of the screw 88. A die 94 with a perforated semi-spherical or otherwise dome-shaped die portion is mounted to a stiffening plate 92 which is in turn mounted to the screw housing 86 within the dome-shaped portion in axial alignment with the screw 88. As with the embodiment of Figures 9-13, the extrusion blade 90 is helical in shape with its outer edge conforming generally to the semi-spherical or dome shape of the inner surface of the die 94. The operation of this embodiment of the present invention is basically the same as for the preferred embodiment of the present invention, except that the extrusion effect produced by the scraping effect of the blade 90 and the pressure generated by the screw 88 are somewhat aided by gravity G.

## Claims

1. A screw-type extrusion granulating apparatus (50) for extruding a moistened powder material into granules, said apparatus comprising a housing (54) defining a screw chamber (55) for receiving said powder material, a rotatably driven conveying screw (56) disposed in that said screw chamber for pressurizing conveyance of said powder material through said screw chamber, and a die (60) supported in axial alignment with said conveying screw and extending axially from one end of said screw chamber, said die being of a generally uniform thickness in the shape of a dome and having a plurality of extrusion openings (64) oriented radially with respect to the dome shape of said die in a generally uniform array over substantially the entire surface thereof, said conveying screw having a terminal end (57) extending axially interiorly of that die, characterized in that the extrusion openings (64) are of a cross-sectional dimension approximately the same as the thickness of said die (60), in that the terminal end (57) of the conveying screw (56) has the shape of a dome and is spaced from said die, and in that an extrusion blade (70) having a scraping effect projects from said terminal end of the conveying screw and has a blade edge (72) being curved in general correspondence to said die and being at a substantially uniform radial spacing from the inner surface (66) of said die.

2. A screw-extrusion granulating apparatus according to claim 1 wherein the cross-sectional dimension of the extrusion openings (64) of the die (60) are in the range of about 0.7 mm to 1.2 mm.

3. A screw-extrusion granulating apparatus according to claims 1 or 2 wherein the opening ratio of the die (60) is about 20%.

4. A screw-type extrusion granulating apparatus according to claim 1, 2 or 3 wherein said die (60) is mounted to a stiffening plate (62) said stiffening plate is mounted to said housing (54).

5. A screw-type extrusion granulating apparatus according to claim 1 wherein said extrusion blade (70) is uniformly spaced from said die (60).

6. A screw-type extrusion granulating apparatus according to claim 5, wherein said spacing between said extrusion blade (70) and said die (60) is approximately 1 millimeter.

7. A screw-type extrusion granulating apparatus according to anyone of claims 1 to 4 wherein said die (60) is generally semi-spherical.

8. A screw-type extrusion granulating apparatus according to anyone of claims 1 to 4 and 7 wherein said extrusion openings (64) are generally circular in shape for forming generally cylindrical granules.

9. A screw-type extrusion granulating apparatus according to anyone of claims 1 to 8 wherein said screw chamber (55) contains a plurality of conveying screws (56) disposed in side-by-side, generally parallel relationship and said housing (54) has a plurality of dies (60) mounted thereto and disposed in side-by-side relationship, each said die being in axial alignment with a respective one of said conveying screws.

## Patentansprüche

1. Vorrichtung (50) zur Schneckenextrusionsgranulierung, um ein feuchtes Pulvermaterial in Granulat zu extrudieren, wobei die Vorrichtung ein Gehäuse (54), das eine Schneckenkammer (55) zur Aufnahme des Pulvermaterials definiert, eine rotierend angetriebene Förderschnecke (56), die in der Schneckenkammer zur unter Druck setzenden Förderung des Pulvermaterials durch die Schneckenkammer angeordnet ist, sowie eine Düse (60) beinhaltet, die in axialer Ausrichtung mit der Förderschnecke gehalten ist und sich axial von einem Ende der Schneckenkammer aus erstreckt, wobei die Düse von einer in etwa gleichmäßigen Dicke in der Gestalt einer Kuppel ist und eine Mehrzahl von Extrusionsöffnungen (64) aufweist, die bezüglich der Kuppelgestalt der Düse in einer in etwa gleichmäßigen Anordnung über im wesentlichen die gesamte Oberfläche derselben radial orientiert sind, wobei die Förderschnecke ein Abschlußende (57) aufweist, das sich axial im Inneren dieser Düse erstreckt, dadurch gekennzeichnet, daß die Extrusionsöffnungen (64) eine Querschnittsabmessung besitzen, die ungefähr gleich der Dicke der Düse (60) ist, daß das Abschlußende (57) der Förderschnecke (56) die Gestalt einer Kuppel aufweist und von der Düse beabstandet ist und daß ein Extrusionsabstreichmesser (70), das einen abstreifenden Effekt hat, von dem Abschlußende der Förderschnecke vorsteht und eine Abstreichkante (72) besitzt, die in etwa übereinstimmend mit der Düse gebogen ist und sich in einem im wesentlichen gleichmäßigen radialen Abstand von der Innenseite (66) der Düse befindet.

2. Vorrichtung zur Schneckenextrusionsgranulierung nach Anspruch 1, wobei die Querschnittsabmessung der Extrusionsöffnungen (64) der Düse (60) im Bereich von etwa 0,7 mm bis 1,2 mm liegt.

3. Vorrichtung zur Schneckenextrusionsgranulierung nach Anspruch 1 oder 2, wobei das Öffnungsverhältnis der Düse (60) etwa 20 % beträgt.

4. Vorrichtung zur Schneckenextrusionsgranulierung nach Anspruch 1, 2 oder 3, wobei die Düse (60) auf einer Versteifungsplatte (62) angebracht ist, wobei die Versteifungsplatte an dem Gehäuse (54) montiert ist.

5. Vorrichtung zur Schneckenextrusionsgranulierung nach Anspruch 1, wobei das Extrusionsabstreichmesser (70) gleichmäßig von der Düse (60) beabstandet ist.

6. Vorrichtung zur Schneckenextrusionsgranulierung nach Anspruch 5, wobei der Abstand zwischen dem Extrusionsabstreichmesser (70) und der Düse (60) ungefähr 1 Millimeter beträgt.

7. Vorrichtung zur Schneckenextrusionsgranulierung nach einem der Ansprüche 1 bis 4, wobei die Düse (60) in etwa halbkugelförmig ist.

8. Vorrichtung zur Schneckenextrusionsgranulierung nach einem der Ansprüche 1 bis 4 und 7, wobei die Extrusionsöffnungen (64) in etwa von kreisförmiger Gestalt sind, um allgemein zylindrisches Granulat zu erzeugen.

9. Vorrichtung zur Schneckenextrusionsgranulierung nach einem der Ansprüche 1 bis 8, wobei die Schneckenkammer (55) eine Mehrzahl von Förderschnecken (56) enthält, die Seite an Seite in etwa parallel zueinander angeordnet sind, und wobei das Gehäuse (54) eine Mehrzahl von Düsen (60) aufweist, die daran angebracht und Seite an Seite angeordnet sind, wobei sich jede Düse in axialer Ausrichtung zu einer jeweiligen der Förderschnecken befindet.

## Revendications

1. Un appareil de granulation (50) du type à vis d'extrusion pour extruder un matériau en poudre humidifiée en granulés, ledit appareil comprenant un logement (54) définissant une chambre de vis (55) pour recevoir ledit matériau en poudre, une vis convoyeuse (56) entraînée en rotation disposée dans ladite chambre de vis pour le transport par pression du matériau à travers ladite chambre de vis, et une filière 60 montée en alignement axial avec ladite vis convoyeuse et s'étendant axialement à partir d'une extrémité de ladite chambre de vis, ladite filière étant d'épaisseur générale uniforme et conformée en dôme avec une pluralité d'ouvertures d'extrusion (64) orientées radialement par rapport au dôme de ladite filière et dans une zone uniforme sur sensiblement toute la surface de la filière, ladite vis convoyeuse ayant une extrémité (57) s'étendant axialement à l'intérieur de ladite filière, caractérisé en ce que les ouvertures d'extrusion (64) sont de section transversale approximativement égale à l'épaisseur de ladite filière (60), en ce que l'extrémité (57) de la vis convoyeuse 56 présente la forme d'un dôme et est espacée de ladite filière, et en ce qu'une lame d'extrusion (70) ayant un effet de grattage fait saillie à partir de ladite extrémité de la vis convoyeuse et un bord de lame (72) courbe correspondant à ladite filière en étant sensiblement espacée d'une manière uniforme radialement de ladite surface intérieure (66) de la filière.

2. Un appareil de granulation à vis d'extrusion selon la revendication 1, dans lequel la dimension transversale des ouvertures d'extrusion (64) de la filière (60) est comprise dans la gamme de 0,7 à 1,2 millimètres.

3. Un appareil de granulation à vis d'extrusion, selon les revendications 1 ou 2, dans lequel le ratio d'ouverture de la filière (60) est sensiblement égal à 20 %.

4. Un appareil de granulation à vis d'extrusion selon les revendications 2 ou 3, caractérisé en ce que ladite filière (60) est montée sur une plaque de rigidification (62), ladite plaque rigidification étant montée sur ledit logement (54).

5. Un appareil de granulation à vis d'extrusion selon la revendication 1, dans lequel ladite lame d'extrusion (70) est espacée uniformément de ladite filière (60).

6. Un appareil de granulation à vis d'extrusion selon la revendication 5, dans lequel l'espacement entre la lame d'extrusion (70) et la filière (60) est sensiblement égal à un millimètre.

7. Un appareil de granulation à vis d'extrusion selon les revendications 1 ou 4, dans lequel ladite filière est généralement hémisphérique.

8. Un appareil de granulation à vis d'extrusion selon l'une quelconque des revendications 1 à 4 et 7, dans lequel lesdites ouvertures d'extrusion (64) sont généralement circulaires pour former des granulés cylindriques.

9. Un appareil de granulation à vis d'extrusion selon l'une quelconque des revendications 1 à 8, dans lequel ladite chambre de vis (55) contient une pluralité de vis convoyeuses (56) disposées côte à côte, parallèlement, ledit logement (54) ayant une pluralité de filières (60) disposées côte à côte, chacune desdites filières étant axialement alignée avec l'une desdites vis convoyeuses.
